# EUROPÄISCHE PATENTSCHRIFT

(11) **EP 0 898 919 B1**
(45) Veröffentlichungstag und Bekanntmachung des Hinweises auf die Patenterteilung: **05.03.2003**
(21) Anmeldenummer: 98114418.1
(22) Anmeldetag: 31.07.1998
(51) Int. Cl.: A47K 3/28, F16B 9/02

(54) **Verstellelement für eine Duschvorrichtung oder dgl.**
Adjusting element for shower device or the like
Elément de réglage pour dispositif de douche ou équivalent

(30) Priorität: 29.08.1997 DE 19737645
(43) Veröffentlichungstag der Anmeldung: 03.03.1999
(73) Patentinhaber: Villeroy & Boch Wellness B.V., 9301 ZR Roden (NL)
(72) Erfinder: Dijkhuizen, Okko Kornelis, 9301 KA Roden (NL)
(74) Vertreter: KEIL & SCHAAFHAUSEN

(56) Entgegenhaltungen:
- EP-A- 0 132 003
- EP-A- 0 133 140
- EP-A- 0 594 075
- CH-A- 483 543
- DE-U- 29 700 447
- DE-U- 29 700 488
- DE-U- 29 706 753
- GB-A- 2 034 390
- US-A- 4 739 602

## Beschreibung

Die vorliegende Erfindung bezieht sich auf ein Verstellelement zur Positionierung eines Befestigungselements für z.B. eine Duschabtrennung bildende Abtrennelemente an einer Gebäudewand oder dergleichen nach dem Oberbegriff des Anspruchs 1.

Bestimmte Duschvorrichtungen, wie zum Beispiel Duschkabinen, bestehen aus einer Duschwanne und beispielsweise als feststehendes Wand- oder Türelement ausgebildeten Duschabtrennelementen, wobei letztere an einer Gebäudewand oder dergleichen mit stangenartigen Befestigungselementen befestigbar sind. Eine genaue und dabei gleichzeitig einfache Montage ist beispielsweise bei einem feststehenden Wandteil erforderlich, wenn Duschwanne und Wandelement aufeinander abzustimmen sind, um auf den Einsatz von Dichtprofilen für die Abdichtung zwischen beiden verzichten zu können. Das gleiche gilt beispielsweise bei der Montage eines maßgenau mit seiner Unterseite der bspw. gebogenen Oberseite des Wannenrandes angepaßten Türelement, bei dem das Wasser zum Bereich der Türmitte läuft, so daß auch ohne Ablaufprofil eine hohe Dichtigkeit der Tür erreicht wird.

Mit herkömmlichen Scharnierbefestigungen oder dergleichen ist insbesondere in diesen Fällen eine funktionsgerechte Positionierung eines stangenartigen Befestigungselements nur sehr schwer zu erreichen. Darüber hinaus ergibt sich bei der Verwendung solcher bekannten Befestigungen insbesondere bei hochwertigen Kunststoff- oder Glas-Abtrennelementen ein insgesamt ungünstiger ästhetischer Eindruck.

Aus der GB-A-2 034 390 ist ein Verstellelement der eingangs genannten Art bekannt, bei welchem eine Verstellung des Befestigungselements senkrecht zu einer Wand nur durch mehr oder weniger weites Einschieben eines dübelartigen Schaftes in ein Bohrloch einer Wand möglich ist.

Aufgabe der vorliegenden Erfindung ist die Schaffung eines gattungsgemäßen Verstellelements bei der eine einfachere, schnellere und zugleich genauere und sicherere Positionierung eines insbesondere stangenartigen Befestigungselements erreicht werden kann.

Diese Aufgabe wird erfindungsgemäß durch die Merkmale des Patentanspruchs 1 gelöst.

Bei einem gattungsgemäßen Verstellelement ist das Befestigungselement in drei Richtungen positionierbar, nämlich in einer ersten bezüglich des Befestigungselements axialen Schieberichtung sowie in zwei dazu und zueinander senkrechten zweiten und dritten Schieberichtungen.

Das erfindungsgemäße Verstellelement erlaubt es ein Befestigungselement und ein mit ihm verbundenes Abtrennelement, insbesondere ein beispielsweise feststehendes Wand- oder ein Türelement fest und in allen drei Raumrichtungen unabhängig voneinander verstellbar an einer Gebäudewand oder dergleichen anzubringen. Die Montage oder Demontage der Duschvorrichtung kann einfach und schnell erfolgen, wobei trotz einer besonderen Leichtgängigkeit des Verstellelements eine stabile Befestigung erreicht wird.

Bei dem Verstellelement ist ein Stellgehäuse an der Gebäudewand oder dgl. befestigbar und ein relativ zu dem Stellgehäuse in der zweiten bzw. dritten Schieberichtung verschiebbares Schiebeelement sowie eine relativ zu dem Stellgehäuse bzw. dem Schiebeelement in der zweiten bzw. dritten Schieberichtung verschiebbare Befestigungshülse für die Aufnahme des Befestigungselements vorgesehen, wodurch eine besonders einfache Handhabung erreicht wird.

Wenn das Befestigungselement in seiner Lage relativ zu einem Befestigungspunkt der Gebäudewand oder dgl. verstellbar und anschließend in der erreichten Lage festlegbar ist, ist eine genaue und dabei gleichzeitig einfache Montage des Befestigungselements möglich.

Wenn bei dem Verstellelement die Befestigungshülle eine die axiale Schieberichtung festlegende nach vorne weisende Eintrittsöffnung aufweist, in welcher ein Endteil eines Befestigungselements axial, d.h. in der ersten Schieberichtung bewegbar und anschließend mittels eines ersten Klemmetements mit der Befestigungshülse lösbar verbindbar ist, ist ein zu positionierendes Befestigungselement besonders einfach in das Verstellelement aufnehmbar.

Weist das Schiebeelement eine axial nach vorne weisende Schiebeöffnung auf, in der die Befestigungshülse in der zweiten Schieberichtung verschiebbar und mittels eines zweiten Klemmelements mit dem Schiebeelement lösbar verbindbar ist, kann ein Befestigungselement besonders einfach in der zweiten Schieberichtung positioniert werden.

Wenn das Schiebeelement eine axial nach vorne weisende Verstellöffnung des Stellgehäuses aufweist und in der dritten Schieberichtung verschiebbar und mittels eines dritten Klemmelements mit dem Stellgehäuse lösbar verbindbar ist, kann ein Befestigungselement besonders einfach in der dritten Schieberichtung positioniert werden.

Bei einer bevorzugten Ausführungsform der Erfindung bildet die Verstellöffnung einen die dritte Schieberichtung festlegenden
Führungskanal für den Schiebeelement mit zwei einander diametral gegenüberliegende Halteränder. Die Halteränder weisen jeweils außenseitig Abstützflächen für das dritte Klemmelement und innenseitig Schiebeprofile auf. Das Schiebe-element weist ein Wandungsteil auf, das dem Führungskanal angepaßt ist und mit den Schiebeprofilen entsprechenden Schiebeflanschen versehen ist. Die Schiebeflansche des Wandungsteils erstrecken sich zur axialen Arretierung unter die Schiebeprofile der Halteränder. Das Wandungsteil weist einen über die Abstützflächen nach vorne hinausragenden Kopplungsbereich für den Angriff des dritten Klemmelements. Dieses ist dazu geeignet, sich auf die Abstützflächen abstützend das Stellgehäuse und den Schiebeelement gegeneinander axial zu verspannen, wobei z.B. die Schiebeprofile und äußeren Schiebeflansche miteinander mit Preßdruck in lösbaren Eingriff zu bringen. Hiermit wird eine besonders einfache korrekte Positionierung in der dritten Richtung erreicht.

Bei einer weiteren Ausbildung dieses Erfindungsgedankens ist der Kopplungsbereich des Schiebeelements zylinderförmig ausgebildet. Das dritte Klemmelement weist eine entsprechende angepaßte Klemmöffnung auf. Am Kopplungsbereich und am dritten Klemmelement sind zum Erreichen der axialen Verspannung, einander entsprechende Außen- bzw. Innen-Drehgewinde vorgesehen.

Bei einer weiteren bevorzugten Ausführungsform der Erfindung weist der Wandungsteil des Schiebeelements in der Schiebeöffnung zwei einander diametral gegenüberliegende Schiebeschultern auf, die in die zweite Schieberichtung weisen. Die Befestigungshülse ist mit Spiel in die erste Schieberichtung in der Schiebeöffnung angeordnet und weist an ihrem hinteren Ende den Schiebeschultern entsprechende Schiebeflächen auf, die sich senkrecht zur Achse unter die Schiebeschultern erstrecken und damit eine axiale Arretierung bilden. Hiermit wird eine besonders einfache und genaue Positionierung in der zweiten Schieberichtung ermöglicht.

Zum gleichen Zweck weist bei einer weiteren bevorzugten alternativen Ausführungsform der Wandungsteil des Schiebe-elements zwei im Bereich der äußeren Schiebeflansche angeordnete, einander diametral entgegengesetzte Wandöffnungen auf, die in die zweite Schieberichtung orientiert sind. Die mit Spiel in die erste Richtung angeordnete Befestigungshülse weist an ihrem hinteren Ende den Wandöffnungen angepaßte Schiebezungen auf und ist daher in die zweite Schieberichtung verschiebbar.

In einer weiteren Ausgestaltung der letzten beiden Ausführungsformen weist der Wandungsteil des Schiebeelements im Kopplungsbereich axial nach vorne anschließend Abstützränder für das zweite Klemmelement auf, wobei die Befestigungshülse mit einem Kopplungsteil an dem das zweite Klemmelement angreifen kann, nach vorne über die Abstützränder hinausreicht. Das Klemmelement ist dazu geeignet, sich auf die Abstützränder abstützend Schiebeelement und Befestigungshülse axial gegeneinander zu verspannen und damit die Schiebeschultern mit den Schiebeflächen bzw. die Wandöffnungen mit den Schiebezungen mit Preßdruck in lösbaren Eingriff zu bringen sind.

Bei einer weiteren bevorzugten Ausbildung dieses Erfindungsgedankens ist der Kopplungsteil der Befestigungshülse zylinderförmig ausgebildet. Der Kopplungsteil der Befestigungshülse und das zweite Klemmelement weisen einander entsprechende Außen- bzw. Innendrehgewinde zum Erreichen der axialen Verspannung auf.

Für eine einfache axiale Positionierung eines Befestigungselements ist das sich axial nach vorne an dem Kopplungsteil anschließende vordere Ende der Befestigungshülse als Klemmbüchse und das erste Klemmelement als eine die Klemmbüchse insbesondere peripher umfassende Klemmutter ausgebildet. Klemmbüchse und Klemmutter weisen einander entsprechende Außen- bzw. Innendrehgewinde auf.

Zu diesem Zweck kann die Klemmbüchse auch einen oder mehrere durch axial verlaufende Längsschlitze aufgetrennte, insbesondere in radialer Richtung elastische Klemmzungen aufweisen. Mittels der Klemmutter können die Klemmzungen radial nach innen gegen ein eines in der Befestigungshülse aufgenommenes Endstück gepreßt werden.

Um die Klemmutter dabei axial korrekt zu halten ist es vorteilhaft, wenn die Klemmbüchse einen etwa im Bereich der Längsschlitze angeordneten peripheren Halteflansch und die Klemmutter inseitig diesem entsprechede innere Halteschultern aufweist.

Um insbesondere bei der Montage bzw. Demontage einen sicheren Sitz eines Endstücks in der Befestigungshülse zu gewährleisten, ist die Befestigungshülsenöffnung im Bereich des vorderen Endes der Befestigungshülse nach vorne hin, beispielsweise konusartig verengt, wobei die Klemmutter über die Klemmbüchse axial nach vorne hinausreicht und eine entsprechende Verengung aufweist.

Um den Endteil eines Befestigungsteils leichter in die Befestigungshülse einzuführen, kann das Endteil ein insbesondere aufsetzbar ausgebildetes Führungselement, zum Beispiel aus Kunststoff aufweisen, das sich zum Ende hin verjüngt.

Um einen festeren Sitz der Befestigungselemente in der zweiten Schieberichtung zu erreichen, können die Schiebeschultern und die Schiebeflächen bzw. die Wandöffnungen und die Schiebezungen einander entsprechende sägezahnartige Profilstrukturen aufweisen, die geeignet sind, einer relativen Bewegung in der zweiten Schieberichtung entgegen zu wirken.

Um einen festeren Sitz der Befestigungselemente in der dritten Schieberichtung zu erreichen, können die Schiebeprofile und die Schiebeflansche einander entsprechende sägezahnartige Profilstrukturen aufweisen, die geeignet sind, einer Bewegung beider relativ zueinander in der dritten Schieberichtung entgegen zu wirken.

Um eine einfache Handhabung der Klemmelemente zu gewährleisten, ist es vorteilhaft, wenn das zweite und/oder das dritte Klemmelement als Klemmring oder als Klemmplatte mit einer Öffnung für den Kopplungsteil der Befestigungshülse bzw. den Kopplungsbereich des Schiebeelements ausgebildet ist.

Um eine hohe mechanische Stabilität bei gleichzeitiger Gewichtsersparnis zu erreichen, kann der Klemmring zum Beispiel eine peripher umlaufende Nut aufweisen.

Zur Erhöhung der mechanischen Stabilität und um das Innere des Verstellelements gegen Feuchtigkeit zu schützen, kann das Stellgehäuse einen parallel zur Gebäudewand oder dergleichen und senkrecht zur Achse orientierten hinteren Gehäuseboden aufweisen.

Zur Verbesserung der mechanischen Stabilität können sich das Schiebeelement mit seinem Wandungsteil und/oder die Befestigungshülse jeweils mit ihren hinteren Enden auf den Gehäuseboden abstützen.

Zur Befestigung des Verstellelements an einer Gebäudewand oder dergleichen weist das Stellgehäuse zwei oder mehr Durchgangsöffnungen für Befestigungsschrauben oder dergleichen auf.

Bevorzugt sind ein erstes und ein zweites Verstellelement jeweils mit dem oberen bzw. der unteren zum Mitteilteil eines Befestigungselements i.w. rechtwinklig angeordnetem Endteil lösbar verbunden. im montierten Zustand ist das Mittelstück des Befestigungselements im wesentlichen parallel zu einer Gebäudewand oder dergleichen angeordnet, wobei die oberen und unteren Endteile des Befestigungselements horizontal verlaufen.

Bei einer weiteren bevorzugten Ausführungsform ist ein Verstellelement mit einem oberen zum Scharnierteil für ein Türelement eines Befestigungselements im wesentlichen rechtwinkligstehendes Endteil lösbar verbunden. Im montierten Zustand ist der Scharnierteil des Befestigungselements im wesentlichen parallel zu einer Gebäudewand oder dergleichen angeordnet.

Weitere Ziele, Merkmale, Vorteile und Anwendungsmöglichkeiten der Erfindung ergeben sich aus der nachfolgenden Beschreibung von Ausführungsbeispielen anhand der Zeichnungen.

Es zeigen:
- Fig. 1: eine perspektivische Darstellung einer Duschvorrichtung mit drei Verstellelementen gemäß der Erfindung.
- Fig. 2a: in einem vertikalen Schnitt ein Verstellelement gemäß der Erfindung mit einem in diesem aufgenommene Endteil eines Befestigungselements,
- Fig. 2b: in einem vertikalen Schnitt, das Stellgehäuse sowie eine Teildarstellung des Schiebeelements und des dritten Klemmelements gemäß der Erfindung,
- Fig. 3: eine perspektivische Darstellung einer alternativen Ausführung des Verstellelements,
- Fig. 4: in einem Teilschnitt die Befestigungshülse zusammen mit einem Befestigungselement,
- Fig. 5: das sägezahnartige Profil von Schiebeprofil und Schiebeflansch gemäß der Erfindung,

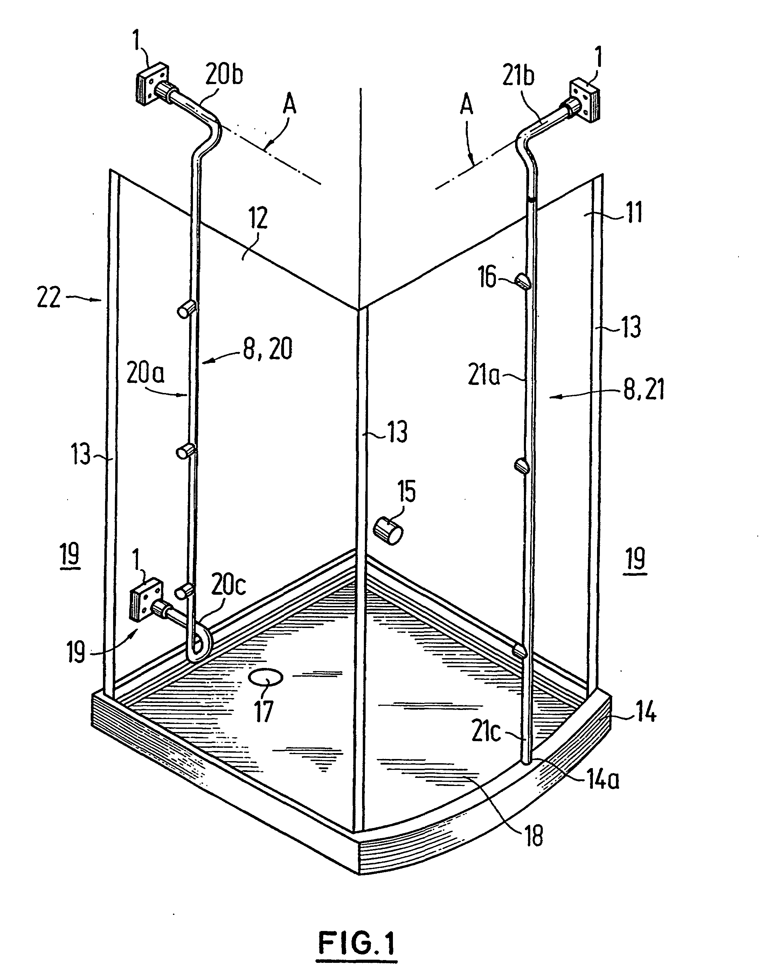

Fig. 1 zeigt eine Duschvorrichtung mit mehreren erfindungsgemäßen Verstellelementen 1 beispielsweise aus Kunststoff oder Metall, die an einer Gebäudewand 19 oder dergleichen angebracht sind. Ein Verstellelement 1 dient jeweils zur Positionierung von zum Beispiel stangenartigen Befestigungselementen 20, 21 für ein Duschabtrennelement 22 beispielsweise ein Türelement 11 oder ein feststehendes Wandelement 12, vorzugsweise aus Glas oder Kunststoff.

Zur Verbindung mit dem Türelement 11 sind an dem Befestigungselement 21 Anschlußstutzen 16 vorgesehen, die eine eigene Verstellmöglichkeit aufweisen. Zwischen dem Türelement 11 und der Gebäudewand 19 sind Dichtprofile 13 angeordnet. Das Türelement 11 kann einen Handgriff 15 aufweisen und ist ggf. ohne zusätzliche Dichtprofile an der Duschwanne 18 angeordnet. Die Duschwanne 18 weist einen Abfluß 17 auf. In dem Vorderrand 14 der Duschwanne 18 ist eine Scharnieröffnung 14a für die senkrechte Aufnahme des Befestigungselements 21 vorgesehen. Um eine Schwenkbewegung des Türelements 11 zu ermöglichen, weist das Befestigungselement 21 einen Scharnierteil 21a auf. Der obere Endteil 21b des Befestigungselements 21 erstreckt sich im wesentlichen horizontal und senkrecht zur Gebäudewand 19, während der Scharnierteil 21a vertikal und im wesentlichen parallel zu der Gebäudewand 19 angeordnet ist.

Das feststehende Wandelement 12 kann ohne zusätzliche Dichtprofile an der Duschwanne 18 angeordnet sein, während zur Abdichtung gegenüber der Gebäudewand 19 Dichtprofile 13 vorgesehen sind. Die oberen und unteren Endteile 20b, 20c des Befestigungselements 20 erstrecken sich im wesentlichen horizontal und senkrecht zur Gebäudewand 19. Zur Verbindung mit dem feststehenden Wandelement 12 weist das Befestigungselement 20 in seinem im wesentlichen vertikal und parallel zur Gebäudewand 19 angeordneten Mittelteil 21a einen oder mehrere Anschlußstutzen 16 auf, die zusätzliche Verstellmöglichkeiten aufweisen können. Zur Abdichtung können zwischen dem Türelement 11 und dem feststehenden Wandelement 12 Abdichtprofile 13 vorgesehen sein.

Jedes Abtrennelement 22, 11, 12 kann bereits vor der Montage an einer Gebäudewand 19 oder dergleichen mit einem Befestigungselement 8, 20, 21 verbunden sein.

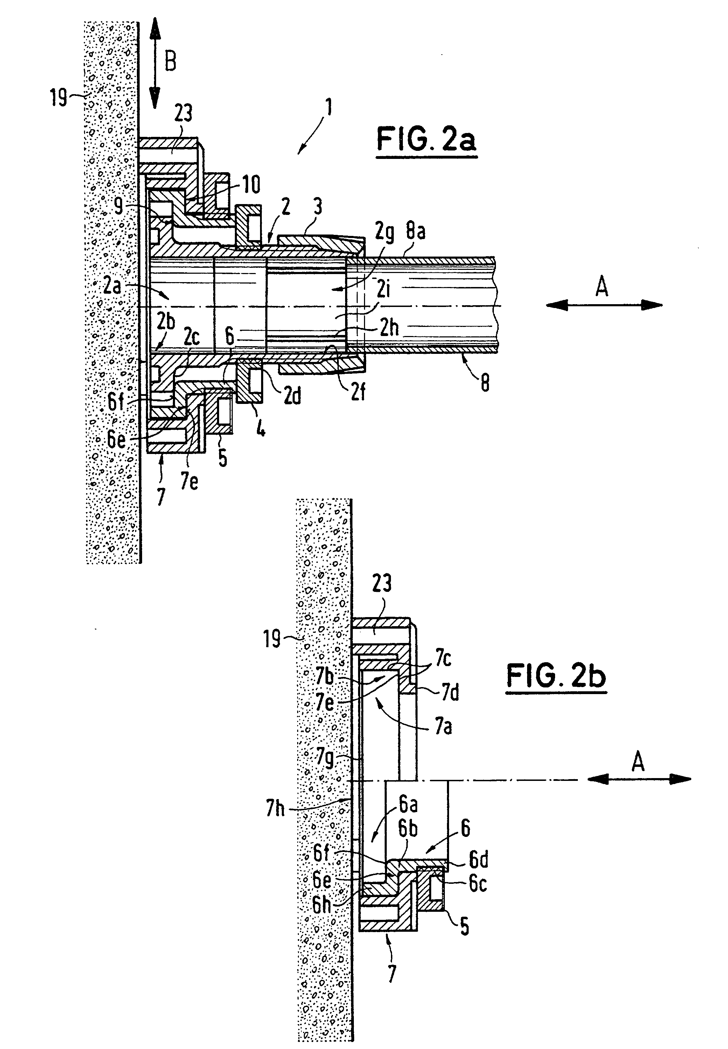

In den Fig. 2a, 2b ist schematisch in einem vertikalen Schnitt eine Ausführungsform des Verstellelements 1 dargestellt. Wie aus Fig. 2a ersichtlich ist, besteht das Verstellelement 1 aus einer kreiszylindrischen Befestigungshülse 2 mit einer eine axiale Schieberichtung A festlegende Einsetzöffnung 2a, einem dazu passenden hohlen Schiebeelement 6 mit einer axial nach vorne orientierten Schiebeöffnung 6a sowie einem beispielsweise an einer Gebäudewand 19 oder dergleichen befestigbaren Stellgehäuse 7. Die Einsetzöffnung 2a kann das ihr angepaßte Endteil 8a des Befestigungselements 8 aufnehmen. Das Befestigungselement 8 ist mit seinem Endteil 8a in der Einsetzöffnung 2a axial bewegbar und mit der Befestigungshülse 2 mittels eines ersten Klemmelements 3 lösbar verbindbar.

In der axial nach vorne weisenden Schiebeöffnung 6a ist die Befestigungshülse 2 in eine zu der ersten Schieberichtung A senkrechten zweiten Schieberichtung B verschiebbar und mittels eines zweiten Klemmelements 4 mit dem Schiebeelement 6 lösbar verbindbar.

Das Schiebeelement 6 ist in einer axial nach vorne weisenden Verstellöffnung 7a des Stellgehäuses 7 in einer zur ersten Schieberichtung A und zur zweiten Schieberichtung B senkrechten dritten Schieberichtung C verschiebbar. Mittels eines dritten Klemmelements 5 ist das Schiebeelement 6 mit dem Verstellgehäuse 7 lösbar verbindbar angeordnet.

Da das Schiebeelement 6 in dem hohlen Stellgehäuse 7 in die dritte Schieberichtung C senkrecht zur ersten Schieberichtung A bewegbar ist, in dem Schiebeelement 6 wiederum die Befestigungshülse 2 in die zweite Schieberichtung B bewegbar ist und in der Befestigungshülse 2 wiederum das Befestigungselement 8 axial und senkrecht zu den zweiten und dritten Schieberichtungen B und C bewegbar ist, kann die Position des Befestigungselements 8, wenn es mit seinem Endteil 8a in der Einsetzöffnung 2a der Befestigungshülse 2 untergebracht ist in allen drei Raumrichtungen unabhängig verändert werden. Die lösbare Verbindung zwischen Befestigungshülse 2 und Befestigungselement 8 mittels des ersten Klemmelements 3, zwischen Befestigungshülse 2 und Schiebeelement 6 mittels des zweiten Klemmelements 4 als auch zwischen Schiebeelement 6 und Stellgehäuse 7 mittels des dritten Klemmelements 5 ermöglicht eine unabhängige Fixierung des Befestigungselements 8 jeweils in einer der Schieberichtungen A, B, C.

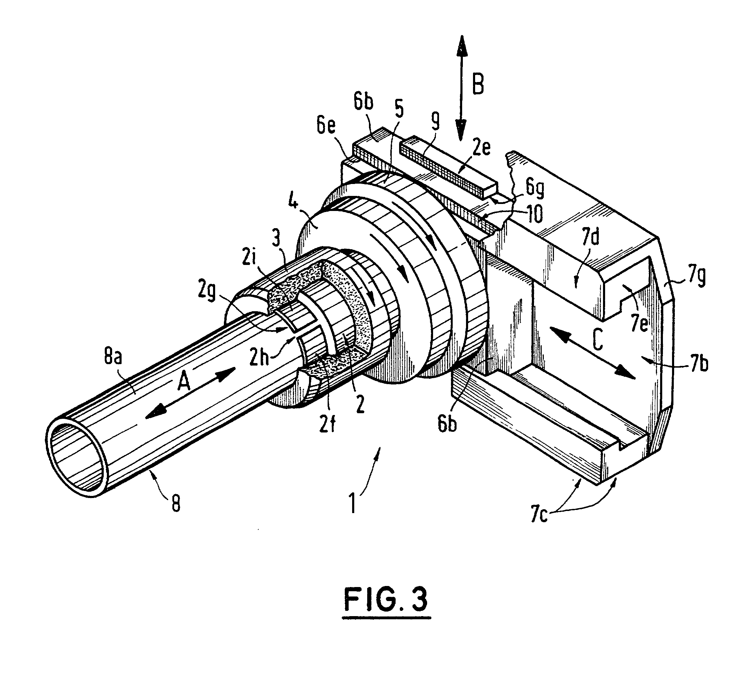

Wie in den Fig. 2b und Fig. 3 dargestellt ist, bildet die Verstellöffnung 7a des Stellgehäuses 7 einen in die dritte Schieberichtung C orientierten Führungskanal 7b für das Schiebeelement 6 mit zwei einander diametral gegenüberliegenden Halterändern 7c. Die Halteränder 7c weisen jeweils außenseitig Abstützflächen 7d für das dritte Klemmelement 5 auf. Innenseitig weisen die Abstützflächen 7d Schiebeprofile 7e für zwei entsprechende äußere Schiebeflansche 6e des Wandungsteils 6b des Schiebeelements 6 auf. Die Schiebeprofile 7e ragen in den Führungskanal 7b und fixieren den Schiebe-element in der ersten Schieberichtung A sowie der zweiten Schieberichtung B. Senkrecht zu den Richtungen A, B ist das Schiebeelement 6 in dem Führungskanal 7b in die dritte Schieberichtung C bewegbar.

Der Wandungsteil 6b weist einen über die Abstützflächen 7d nach vorne hinausragenden Kupplungsbereich 6c auf, an dem das dritte Klemmelement 5 angreifen kann. Dieses ist dazu geeignet, sich auf die Abstützflächen 7d abstützend das Stellgehäuse 7 und das Schiebeelement 6 gegeneinander axial zu verspannen. Die innenseitig angeordneten Schiebeprofile 7e und die Schiebeflansche 6e werden bei der axialen Verspannung von Stellgehäuse 7 und Schiebeelement 6 miteinander mit Preßdruck in lösbaren Eingriff gebracht und damit die Position des Schiebeelements 6 gegenüber der dritten Schieberichtung C fixiert. Der Kopplungsbereich 6c des Schiebeelements 6 kann zylinderförmig ausgebildet sein. Am Kopplungsbereich 6c und an dem entsprechend ausgebildeten dritten Klemmelement 5 sind zum Erreichen der axialen Verspannung einander entsprechende Außen- bzw. Innendrehgewinde vorgesehen.

Wie in den Fig. 2a und 2b weiter veranschaulicht, weist der Wandungsteil 6b des Schiebeelements 6 einander diametral gegenüberliegende innere Schiebeflansche 6f auf, die in die zweite Schieberichtung B orientiert sind. Die Befestigungshülse 2 weist an ihrem hinteren Ende 2b den Schiebeschultern 6f entsprechende Schiebeflächen 2c auf. Damit die Befestigungshülse 2 in die erste Richtung B bewegbar ist, ist die Befestigungshülse 2 mit Spiel gegenüber dem Wandungsteil 6b in der Schiebeöffnung 6a angeordnet.

In Fig. 3 ist eine alternative Ausführungsform veranschaulicht, bei der der Wandungsteil 6b des Schiebeelements 6 zwei im Bereich der Schiebeflansche 6e angeordnete Wandöffnungen 6g aufweist. Die Wandöffnungen 6g sind einander diametral gegenüber angeordnet und legen damit die zweite Schieberichtung B fest. Die Befestigungshülse 2 weist in ihrem hinteren Ende 2b Schiebezungen 2e auf, die den Wandöffnungen 6g angepaßt sind, so daß diese in die zweite Schieberichtung B jeweils in den Wandöffnungen 6g formschlüssig bewegbar sind. Hierfür können entsprechende Ausnehmungen in den Halterändern 7c des Führungskanals 7b vorgesehen sein, die jedoch in der Fig. 3 bildlich nicht dargestellt sind. Die Befestigungshülse 2 ist mit Spiel gegenüber der Wandung 6b in der Öffnung 6a des Schiebeelements 6 angeordnet und daher in der dritten Schieberichtung C bewegbar.

Axial nach vorne an den Bereich des Schiebeflanschen 6e bzw. der Schiebeschulter 6f anschließend weist der Wandungsteil 6b des Schiebeelements 6 im Kopplungsbereich 6c Abstützränder 6d auf, auf die sich das zweite Klemmelement 4 abstützen kann. Die Befestigungshülse 2 reicht mit einem Kopplungsteil 2d nach vorne über die Abstützränder 6d hinaus, an dem das zweite Klemmelement 4 angreifen kann. Indem sich das Klemmelement 4 auf die Abstützränder 6d abstützt, kann es das Schiebeelement 6 und die Befestigungshülse 2 axial gegeneinander verspannen, wobei die Schiebeschultern 6f mit den Schiebeflächen 2c bzw. die Wandöffnungen 6b mit den Schiebezungen 2e mit Preßdruck in lösbaren Eingriff gebracht werden. Hiermit ist die Position der Befestigungshülse 2, und damit des Befestigungselements 8, gegenüber dem Schiebeelement 6 fixiert.

Der Kopplungsteil 2d der Befestigungshülse 2 kann, wie in den Fig. 2a und 3 dargestellt, zylinderförmig ausgebildet sein und ein Außendrehgewinde aufweisen. Das zweite Klemmelement 4 weist ein entsprechendes Innendrehgewinde auf.

Das sich axial nach vorne an den Kopplungsteil 2d anschließende vordere Ende 2f der Befestigungshülse 2 kann um die axiale Positionierung des Befestigungselements 8 zu erleichtern als Klemmbüchse 2g ausgebildet sein, die dem Endteil 8a des Befestigungselements 8 angepaßt ist. Das Befestigungselement 8 ist in diesem Fall mit seinem Endteil 8a bereits ohne eine befestigende Einwirkung des ersten Klemmelements 3 in der Klemmbüchse 2g in allen Richtungen senkrecht zur Schieberichtung A festgelegt. In Richtung A ist dagegen eine leichtgängige Verschiebung des Befestigungselements 8 möglich.

Das erste Klemmelement 3 ist als eine die Klemmbüchse 29 beispielsweise peripher umfassende Klemmutter 3 ausgebildet. Zum Erreichen der lösbaren Verbindung zwischen der Befestigungshülse 2 und dem Befestigungselement 8 wird die Klemmutter 3 angezogen. Klemmbüchse 2g und Klemmutter 3 weisen hierfür einander entsprechende Außen- bzw. Innendrehgewinde auf.

In den Fig. 2a, 3 und 4 ist veranschaulicht, daß die Klemmbüchse 2g Klemmzungen 2i aufweist, die durch einen oder mehrere axial verlaufende Längsschlitze 2h aufgetrennt sind. Wenn die Klemmutter 3 angezogen wird, werden die elastisch ausgebildeten Klemmzungen 2i radial nach innen gegen das Endstück 8a eines in die Eintrittshülse 2 aufgenommenen Befestigungselements 8 gepreßt. Solange die Klemmutter 3 nicht angezogen wird, ist das Befestigungselement 8 mit seinem Endteil 8a axial relativ leicht verschiebbar in der Befestigungshülse 2 angeordnet. Etwa im Bereich der Längsschlitze 2h weist die Klemmbüchse 2g einen peripheren Halteflansch 2j auf, um die Klemmutter 3 axial richtig zu halten. Hierfür sind bei der Klemmutter 3 entsprechende innere Halteschultern 3a vorgesehen.

Im Bereich des vorderen Endes 2f ist die Befestigungsöffnung 2a nach vorne hin verengt, beispielsweise konusartig, wodurch ein sicherer Sitz des Befestigungselements 8 in der Befestigungshülse 2 erreicht wird. Die Klemmutter 3 reicht dabei axial nach vorne über die Klemmbüchse 2g hinaus und weist ebenfalls eine entsprechende Verengung auf.

Um das Endteile 8a leichter in die Befestigungshülse 2 einführen zu können, weist diese ein insbesondere aufsetzbar ausgebildetes Führungselement 8b zum Beispiel aus Kunststoff aufweisen, das sich zum Ende hin verjüngen kann.

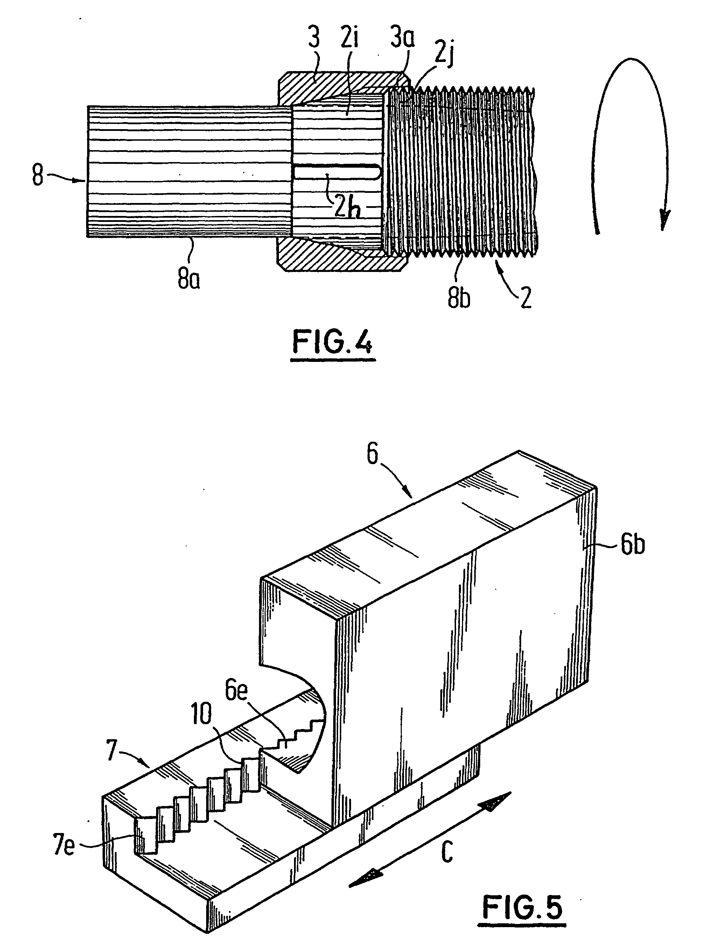

Wie in Fig. 3 und 5 veranschaulicht, weisen die Schiebeflansche 6e und die Schiebeprofile 7e einander entsprechende sägezahnartige Profilstrukturen 10 auf, mit denen eine Relativbewegung beider zueinander in der dritten Schieberichtung C entgegengewirkt wird, wenn beide mit Preßdruck aneinandergehalten sind.

Die Klemmelemente 4 und 5 können auf verschiedene Weise ausgebildet sein; insbesondere können sie für eine einfache Handhabung als Klemmring oder als Klerninpiatte mit einer Öffnung, dem der Kopplungsteil 2d bzw. der Kopplungsbereich 6c des Schiebeelements 6 angepaßt ist, ausgebildet sein. Der Klemmring kann dabei insbesondere eine peripher umlaufende Nut aufweisen.

In seinem hinteren Teil kann das Stellgehäuse 7 einen senkrecht zur axialen Richtung A ausgerichteten und ggf. parallel zur Gebäudewand 19 verlaufenden hinteren Gehäuseboden 7g aufweisen. Das Schiebeelement 6 und/oder die Befestigungshülse 2 können/kann sich mit dem Wandungsteil 6b bzw. dem hinteren Ende 2b auf dem Gehäuseboden 7g abstützen.

Die Befestigung des Verstellelements 1 an einer Gebäudewand 19 erfolgt mittels zweier oder mehrerer Befestigungsschrauben, die durch entsprechende Durchgangsöffnungen 23 im Stellgehäuse 7 geführt sind.

### Bezugszeichenliste:

- 1: Verstellelement
- 2: Befestigungshülse
- 2a: Einsetzöffnung
- 2b: hinteres Ende der Befestigungshülse
- 2c: Schiebeflächen
- 2d: Kopplungsteil
- 2e: Schiebezungen
- 2f: vorderes Ende der Befestigungshülse
- 2g: Klemmbüchse
- 2h: axiale Schlitze
- 2i: Klemmzungen
- 2j: Halteflansch
- 3: erstes Klemmelement (Klemmutter)
- 3a: Halteschulter
- 4: zweites Klemmelement
- 5: drittes Klemmelement
- 6: Schiebeelement
- 6a: Schiebeöffnung
- 6b: Wandungsteil
- 6c: Kopplungsbereich
- 6d: Abstützränder
- 6e: Schiebeflansche
- 6f: Schiebeschulter
- 6g: Wandöffnung
- 6h: hinteres Ende des Wandungsteil
- 7: Stellgehäuse
- 7a: Verstellöffnung
- 7b: Führungskanal
- 7c: Halteränder
- 7d: Abstützflächen
- 7e: Schiebeprofil
- 7g: Gehäuseboden
- 8: Befestigungselement
- 8a: Endteil eines Befestigungselements 8
- 8b: Führungselement
- 9: sägezahnartige Profilstruktur
- 10: sägezahnartige Profilstruktur
- 11: Türelement
- 12: feststehendes Wandelement
- 13: Abdichtprofilen
- 14: Vorderrand der Duschwanne
- 14a: Scharnieröffnung
- 15: Handgriff
- 16: Anschlußstutzen
- 17: Abfluß der Duschwanne
- 18: Duschwanne
- 19: Gebäudewand
- 20: Befestigungselement
- 20a: Mittelteil des Befestigungslements 20
- 20b, c: Endteile des Befestigungselements 20
- 21: Befestigungselement
- 21a: Scharnierteil des Befestigungselements 21
- 21b, c: Endteile des Befestigungselements 21
- 22: Abtrennelement
- 23: Befestigungsöffnung

- A: erste axiale Schieberichtung
- B: zweite Schieberichtung
- C: dritte Schieberichtung

## Patentansprüche

1. Verstellelement (1) zur Positionierung eines Befestigungselements (8, 20,21) für z.B. eine Duschabtrennung bildende Abtrennelemente (11, 12) an einer Gebäudewand (19) oder dgl., wobei das Befestigungselement (8) in drei Richtungen (A, B, C) positionierbar ist, nämlich in einer ersten bezüglich des Befestigungselements (8) axialen Schieberichtung (A) sowie in dazu und zueinander senkrechten zweiten und dritten Schieberichtungen (B, C), **dadurch gekennzeichnet, dass** ein Stellgehäuse (7) an der Gebäudewand (19) oder dgl. befestigbar ist, dass das Befestigungselement (8,20,21) relativ zu dem Stellgehäuse (7) in der ersten Schieberichtung (A) verstellbar ist und dass ein relativ zu dem Stellgehäuse (7) in der zweiten bzw. dritten Schieberichtung (B, C) verschiebbares Schiebeelement (6) sowie eine relativ zu dem Stellgehäuse (7) bzw. dem Schiebeelement (6) in der zweiten bzw. dritten Schieberichtung (B, C) verschiebbare Befestigungshülse (2) für die Aufnahme des Befestigungselements (8,20,21) vorgesehen sind.

2. Verstellelement nach Anspruch 1, **dadurch gekennzeichnet, daß** das Befestigungselement (8,20,21) in seiner Lage relativ zu einem Befestigungspunkt der Gebäudewand (19) oder dgl. verstellbar und anschließend in der erreichten Lage festlegbar ist.

3. Verstellelement nach Anspruch 1 oder 2, **dadurch gekennzeichnet, daß** die Befestigungshülse (2) eine die axiale Schieberichtung (A) festlegende nach vorne weisende Einsetzöffnung (2a) aufweist, in welcher ein Endteil (8a) eines Befestigungselements (8,20,21) axial, d.h. in der ersten Schieberichtung (A), bewegbar und anschließend mittels eines ersten Klemmelements (3) mit der Befestigungshülse (2) lösbar verbindbar ist.

4. Verstellelement nach einem der Ansprüche 1 bis 3, **dadurch gekennzeichnet, daß** das Schiebeelement (6) eine axial nach vorne weisende Schiebeöffnung (6a) aufweist, in der die Befestigungshülse (2) in der zweiten Schieberichtung (B) verschiebbar und mittels eines zweiten Klemmelements (4) mit dem Schiebeelement (6) lösbar verbindbar ist.

5. Verstellelement nach einem der Ansprüche 1 bis 4, **dadurch gekennzeichnet, daß** das Schiebeelement (6) in einer axial nach vorne weisenden Verstellöffnung (7a) des Stellgehäuses (7) in der dritten Schieberichtung (C) verschiebbar und mittels eines dritten Klemmelementes (5) mit dem Stellgehäuse (7) lösbar verbindbar ist.

6. Verstellelement nach Anspruch 5, **dadurch gekennzeichnet, daß** die Verstellöffnung (7a) einen in die dritte Schieberichtung (C) weisenden Führungskanal (7b) für das Schiebe-element (6) mit zwei einander diametral gegenüberliegenden Halterändern (7c) bildet, daß die Halteränder (7c) jeweils außenseitig Abstützflächen (7d) für das dritte Klemmelement (5) und innenseitig Schiebeprofile (7e) aufweisen, daß das Schiebeelement (6) einen in den Führungskanal (7b) eingepaßten Wandungsteil (6b) aufweist mit den Schiebeprofilen (7e) entsprechenden Schiebeflanschen (6e) und einem über die Abstützfläche (7d) nach vorne hinausragenden Kopplungsbereich (6c) für den Angriff des dritten Klemmelements (5), welches dazu geeignet ist, sich auf die Abstützflächen (7d) abstützend, das Stellgehäuse (7) und das Schiebeelement (6) gegeneinander axial zu verspannen, wobei z.B. die Schiebeprofile (7c) und Schiebeflansche (6e) miteinander mit Preßdruck in lösbaren Eingriff bringbar sind.

7. Verstellelement nach Anspruch 6, **dadurch gekennzeichnet, daß** der Kopplungsbereich (6c) des Schiebeelements (6) zylinderförmig ausgebildet ist, daß das dritte Klemmelement (5) eine entsprechend angepaßte Klemmöffnung aufweist, und daß der Kopplungsbereich (6c) und das dritte Klemmelement (5) einander entsprechende Außen- bzw. Innendrehgewinde aufweisen.

8. Verstellelement nach den Ansprüchen 6 oder 7, **dadurch gekennzeichnet, daß** der Wandungsteil (6b) des Schiebeelements (6) in der Schiebeöffnung (6a) zwei einander diametral gegenüberliegende Schiebeschultern (6f) aufweist, welche in die zweite Schieberichtung (B) weisen, und daß die Befestigungshülse (2) mit Spiel in der Schiebeöffnung (6a) des Schiebe-elements (6) angeordnet ist und an ihrem hinteren Ende (2b), den Schiebeschultern (6f) entsprechende Schiebeflächen (2c) aufweist.

9. Verstellelement nach einem der Ansprüche 6 bis 8, **dadurch gekennzeichnet, daß** der Wandungsteil (6b) des Schiebeelements (6) zwei einander diametral entgegengesetzte Wandöffnungen (6g) aufweist, welche in die zweite Schieberichtung (B) weisen und daß die mit Spiel in die Schiebeöffnung (6a) angeordnete Befestigungshülse (2) an ihrem hinteren Ende (2b) den Wandöffnungen (6g) formschüssig angepaßte Schiebezungen (2e) aufweist.

10. Verstellelement nach einem der Ansprüche 6 bis 9, **dadurch gekennzeichnet, daß** der Wandungsteil (6b) des Schiebeelements (6) an den Kopplungsbereich (6c) nach vorne anschließend Abstützränder (6d) für das zweite Klemmelement (4) aufweist und daß die Befestigungshülse (2) mit einem Kopplungsteil (2d) für den Angriff des zweiten Klemmelements (4) nach vorne über die Abstützränder (6d) hinausreicht, welches dazu geeignet ist, sich auf die Abstützränder (6d) abstützend, Schiebeelement (6) und Befestigungshülse (2) gegeneinander axial zu verspannen, wobei z.B. die Schiebeschultern (6f) und Schiebeflächen (2c) bzw. die Schiebeöffnungen (6g) und Schiebezungen (2e) mit Preßdruck in lösbaren Eingriff bringbar sind.

11. Verstellelement nach Anspruch 10, **dadurch gekennzeichnet, daß** der zylinderförmig ausgebildete Kopplungsteil (2d) und das zweite Klemmelement (4) einander entsprechende Außen- bzw. innendrehgewinde aufweisen.

12. Verstellelement nach einem oder mehreren der vorherigen Ansprüche, **dadurch gekennzeichnet, daß** ein vorderes Ende (2f) der Befestigungshülse (2) als Klemmbüchse (2g) zur form- und/oder kraftschlüssigen Aufnahme eines Endteils (8a) und ein erstes Klemmelement (3) als eine eine Klemmbüchse (2g) insbesondere peripher umfassende klemmutter (3) ausgebildet ist.

13. Verstellelement nach Anspruch 12, **dadurch gekennzeichnet, daß** die Klemmbüchse (3) mittels eines oder mehrerer axial verlaufende Längsschlitze (2h) aufgetrennte, insbesondere in radialer Richtung elastische Klemmzungen (2i) aufweist, welche mittels der Klemmutter (3) radial nach innen gegen ein in der Befestigungshülse (2) angeordnetes Endteil (8a) des Befestigungselements (8,20,21) preßbar sind.

14. Verstellelement nach dem Anspruch 13, **dadurch gekennzeichnet, daß** die Klemmbüchse (2g) etwa im Bereich der Längsschlitze (2h) einen peripheren Halteflansch (2j) und die Klemmutter (3) diesen entsprechende innenseitig angeordnete Halteschultern (3a) aufweisen.

15. Verstellelement nach einem oder mehreren der vorherigen Ansprüche, **dadurch gekennzeichnet, daß** ein Endteil (8a) des Befestigungselements (8,20,21) ein beispielsweise aufsetzbar ausgebildetes, insbesondere sich in axialer Richtung zum Ende hin verjüngendes Führungselement (8b) aufweist.

16. Verstellelement nach einem oder mehreren der vorhergehenden Ansprüche, **dadurch gekennzeichnet, daß** Schiebeprofile (7e) und Schiebeflansche (6e) einander entsprechende sägezahnartige Profilstrukturen (10) aufweisen, die geeignet sind, nach dem Festspannen einer Bewegung von Stellgehäuse (7) und Schiebeelement (6) relativ zueinander in der dritten Schieberichtung (C) entgegenzuwirken.

17. Verstellelement nach einem oder mehreren der Ansprüche 8 bis 16, **dadurch gekennzeichnet, daß** Schiebeschultern (6f) und Schiebeflächen (2c) einander entsprechende sägezahnartige Profilstrukturen (9) aufweisen, die geeignet sind, nach dem Festspannen einer Bewegung von Schiebeelement (6) und Befestigungshülse (2) relativ zueinander in der zweiten Schieberichtung (B) entgegenzuwirken.

18. Verstellelement nach einem oder mehreren der Ansprüche 9 bis 17, **dadurch gekennzeichnet, daß** die Wandöffnungen (6g) und die Schiebezungen (2e) einander entsprechende sägezahnartige Profilstrukturen (9) aufweisen, die geeignet sind, nach dem Festspannen einer Bewegung von Schiebeelement (6) und Befestigungshülse (2) relativ zueinander in der zweiten Schieberichtung (B) entgegenzuwirken.

19. Verstellelement nach einem oder mehreren der Ansprüche 5 bis 18, **dadurch gekennzeichnet, daß** ein zweites und/oder ein drittes Klemmelement (4, 5) als Klemmplatte mit Öffnung oder als insbesondere mit einer nach vorne weisenden peripher umlaufenden Nut versehener Klemmring ausgebildet sind/ist.

20. Verstellelement nach einem oder mehreren der vorherigen Ansprüche, **dadurch gekennzeichnet, daß** das Stellgehäuse (7) einen im wesentlichen parallel zur Gebäudewand (19) oder dergleichen ausgerichteten und im wesentlichen senkrecht zu der ersten Schieberichtung (A) stehenden Gehäuseboden (7g) aufweist.

21. Verstellelement nach Anspruch 20, **dadurch gekennzeichnet, daß** die Wandung (6b) und/oder die Befestigungshülse (2) sich mit ihrem hinteren Ende (6h, 2b) auf den Gehäuseboden (7g) abstützt.

22. Verstellelement nach einem oder mehreren der vorherigen Ansprüche, **dadurch gekennzeichnet, daß** in dem Stellgehäuse (7) zwei oder mehr Durchgangsöffnungen (23) für Befestigungsschrauben oder dergleichen vorgesehen sind.

23. Verstellelement nach einem oder mehreren der vorherigen Ansprüche, **dadurch gekennzeichnet, daß** es mit den zu einem Mittelteil (20a) eines Befestigungselements (20) im wesentlichen rechtwinklig angeordneten ersten und zweiten Endteilen (20b, 20c) jeweils lösbar verbindbar ist, wobei insbesondere im montierten Zustand die oberen und unteren Endteile (20b, 20c) horizontal verlaufen und der Mittelteil (20a) des Befestigungselements (20) im wesentlichen parallel zu einer Gebäudewand (19) oder dergleichen verlaufen kann.

24. Verstellelement nach einem oder mehreren vorherigen Ansprüche, **dadurch gekennzeichnet, daß** es mit dem zu einem Scharnierteil (21a) für ein Türelemente (11) eines Befestigungselements (21) im wesentlichen rechtwinklig stehenden Endteil (21b) lösbar verbindbar ist, wobei insbesondere im montierten Zustand der Endteil (21b) im wesentlichen horizontal und der Scharnierteil (21a) im wesentlichen vertikal angeordnet sind.

## Claims

1. Adjusting element (1) for positioning a fixing element (8, 20, 21) for partition elements (11, 12) forming e.g. a shower partition, on a building wall (19) or similar, where the fixing element (A) can be positioned in three directions (A, B, C) namely in a first axial sliding direction (A) in relation to the fixing element (A) and in second and third sliding directions (B, C) perpendicular to this and to each other, **characterised in that** an adjustment housing (7) can be attached to the building wall (19) or similar, that the fixing element (8, 20, 210) is adjustable relative to the adjustment housing (7) in the first sliding direction (A) and that a sliding element (6) mobile in the second and third sliding directions (B, C) relative to the adjustment housing (7) and a fixing sleeve (2) mobile in the second or third sliding directions (B, C) relative to the adjustment housings (7) and the sliding element (6) are provided to hold the fixing element (8, 20, 21).

2. Adjustment device according to claim 1, **characterised in that** the fixing element (8, 20, 21) is adjustable in its position relative to a fixing point of the building wall (19) or similar and then can be established in the position reached.

3. Adjusting element according claim 1 or claim 2, **characterised in that** the fixing sleeve (2) has an insert opening (2a) pointing forwards and establishing the axial sliding direction (A), in which opening an end part (8a) of a fixing element (8, 20, 21) can be moved axially i.e. in the first sliding direction (A) and then connected releasably with the fixing sleeve (2) by means of a first clamping element (3).

4. Adjusting element according to any of claims 1 to 3, **characterised in that** the sliding element (6) has an slide opening (6a) pointing axially forwards, in which the fixing sleeve (2) can be moved in the second sliding direction (B) and connected releasably with the sliding element (6) by means of a second clamping element (4).

5. Adjusting element according to any of claims 1 to 4, **characterised in that** the sliding element (6) can be moved in the third sliding direction (C) in an axially forward-pointing adjustment opening (7a) of the adjustment housing (7) and connected releasably with the adjustment housing (7) by means of a third clamping element (5).

6. Adjusting element according to claim 5, **characterised in that** the adjustment opening (7a) forms a guide channel (7b) for the sliding element (6) pointing in the third sliding direction (C) with two diametrically opposed retaining edges (7c), that the retaining edges (7c) each have external support surfaces (7d) for the third clamping element (5) and internal slide profiles (7e), that the sliding element (6) has a wall part (6b) fitted in the guide channel (7b) and with slide flanges (6e) corresponding to the slide profile (7e) and a coupling area (6c) protruding forwards over the support surface (7d) for engagement with the third clamping element (5) which, supported on the support surface (7d), is suitable for clamping the adjustment housing (7) and the sliding element (6) axially together, where e.g. the slide profile (7c) and the slide flange (6e) can be brought together under pressure into releasable engagement.

7. Adjusting element according to claim 6, **characterised in that** the coupling area (6c) of the sliding element (6) is formed cylindrical, that the third clamping element (5) has a correspondingly shaped clamping opening, and that the coupling area (6c) and third clamping element (5) have corresponding external and internal threads respectively.

8. Adjusting element according to claims 6 or 7, **characterised in that** the wall part (6b) of the sliding element (6) in the slide opening (6a) has two diametrically opposed slide shoulders (6f) pointing in the second sliding direction (B), and that the fixing sleeve (2) is arranged with play in the slide opening (6a) of the sliding element (6) and at its rear end (2b) has slide surfaces (2c) corresponding to the slide shoulders (6f).

9. Adjusting element according to any of claims 6 to 8, **characterised in that** the wall part (6b) of the sliding element (6) has two diametrically opposed wall openings (6g) pointing in the second sliding direction (B) and that the fixing sleeve (2) arranged with play in the slide opening (6a) has at its rear end (2b) slide tongues (2e) adapted form-fit to the wall openings (6g).

10. Adjusting element according to any of claims 6 to 9, **characterised in that** the wall part (6b) of the sliding element (6) has, adjacent to the coupling area (6a) at the front, support edges (6d) for the second clamping element (4) and that the fixing sleeve (2) with a coupling part (2d) for engagement with the second clamping element (4) extends forward beyond the support edges (6d), which clamping element, supported on the support edges (6d), is suitable for clamping axially together sliding element (6) and fixing sleeve (2), where e.g. the slide shoulders (6f) and slide surfaces (2c) or the slide openings (6g) and slide tongues (2e) can be brought under pressure into releasable engagement.

11. Adjusting element according to claim 10, **characterised in that** the cylindrical coupling part (2d) and the second clamping element (4) have corresponding external and internal threads respectively.

12. Adjusting element according to one or more of the previous claims, **characterised in that** a front end (2f) of the fixing sleeve (2) is formed as a clamping socket (2g) to hold by form and/or force fit an end part (8a) and a first clamping element (3) as a clamping nut (3) surrounding a clamping socket (2g) in particular peripherally.

13. Adjusting element according to claim 12, **characterised in that** the clamping socket (3) has clamping tongues (2i) elastic in particular in the radial direction and separated by means of one or more axial slots (2h), which tongues can be pressed by means of the clamping nut (3) radially inwards against an end part (8a) of the fixing element (8, 20, 21) arranged in the fixing sleeve (2).

14. Adjusting element according to claim 13, **characterised in that** the clamping socket (2g) in the area of the slot (2h) has a peripheral retaining flange (2j) and the clamping nut (3) has retaining shoulders (3a) arranged corresponding to these on the inside.

15. Adjusting element according to one or more of the previous claims, **characterised in that** an end part (8a) of the fixing element (8, 20, 21) has a guide element (8b) formed for example for top-mounting, in particular tapering axially towards the end.

16. Adjusting element according to one or more of the previous claims, **characterised in that** slide profiles (7e) and slide flanges (6e) have corresponding saw-tooth profile structures (10) which are suitable after clamping for countering a movement of the adjustment housing (7) and sliding element (6) relative to each other in the third sliding direction (C).

17. Adjusting element according to one or more of claims 8 to 16, **characterised in that** slide shoulders (6f) and slide surfaces (2c) have corresponding saw-tooth profile structures (9), suitable after clamping for countering a movement of the sliding element (6) and fixing sleeve (2) relative to each other in the second sliding direction (B).

18. Adjusting element according to one or more of claims 9 to 17, **characterised in that** the wall openings (6g) and the slide tongues (2e) have corresponding saw-tooth profile structures (9) suitable after clamping for countering a movement of the sliding element (6) and fixing sleeve (2) relative to each other in the second sliding direction (B).

19. Adjusting element according to one or more of claims 5 to 18, **characterised in that** a second and/or a third clamping element (4, 5) is/are formed as a clamping plate with opening or in particular as a clamping ring fitted with a peripheral groove pointing forwards.

20. Adjusting element according to one or more of the previous claims, **characterised in that** the adjustment housing (7) has a housing base (7g) aligned essentially parallel to the building wall (19) or similar and standing essentially vertical to the first sliding direction (A).

21. Adjusting element according to claim 20, **characterised in that** the wall (6b) and/or the fixing sleeve (2) rest with their rear ends (6h, 2b) on the housing base (7g).

22. Adjusting element according to one or more of the previous claims, **characterised in that** in the adjustment housing (7) are provided two or more passage openings (23) for fixing screws or similar.

23. Adjusting element according to one or more of the previous claims, **characterised in that** it can be releasably connected with first and second end pieces (20b, 20c) arranged essentially at right angles to a centre part (20a) of a fixing element (20), where in particular in the assembled state the upper and lower end parts (20b, 20c) run horizontally and the centre part (20a) of the fixing element (20) can run essentially parallel to a building wall (19) or similar.

24. Adjusting element according to one or more of the previous claims, **characterised in that** it can be releasably connected with the end part (21b) standing essentially at right angles to a hinge part (21a) for a door element (11) of a fixing element (21), where in particular in the assembled state the end part (21b) is arranged essentially horizontal and the hinge part (21a) essentially vertical.

## Revendications

1. Elément de positionnement (1) pour le positionnement d'un élément de fixation (8, 20,21) pour des éléments de séparation (11, 12) formant par exemple une cabine de douche sur un mur de bâtiment (19) ou un équivalent, l'élément de fixation (8) pouvant être positionné dans trois directions (A, B, C), à savoir dans une première direction de coulissement axiale (A) par rapport à l'élément de fixation (8) ainsi que dans une seconde et une troisième directions de coulissement (B, C) perpendiculaires à la première et perpendiculaires entre elles, **caractérisé en ce qu'**un boîtier de positionnement (7) peut être fixé au mur de bâtiment (19) ou à un équivalent, **en ce que** l'élément de fixation (8, 20, 21) est positionnable par rapport au boîtier de positionnement (7) dans la première direction de coulissement (A), et **en ce qu'**il est prévu un élément coulissant (6) pouvant coulisser par rapport au boîtier de positionnement (7) dans la deuxième ou la troisième direction de coulissement (B, C) ainsi qu'un manchon de fixation (2) pouvant coulisser par rapport au boîtier de positionnement (7) ou à l'élément coulissant (6) respectivement, dans la deuxième ou la troisième direction de coulissement (B, C) respectivement, pour recevoir l'élément de fixation (8, 20, 21).

2. Elément de positionnement selon la revendication 1, **caractérisé en ce que** la position de l'élément de fixation (8, 20, 21) peut être réglée par rapport à un point de fixation du mur de bâtiment (19) ou de l'équivalent et qu'elle peut être ensuite fixée dans la position atteinte.

3. Elément de positionnement selon la revendication 1 ou 2, **caractérisé en ce que** le manchon de fixation (2) est muni d'une ouverture d'introduction (2a) définissant la direction de coulissement axial (A) et s'étendant vers l'avant, dans laquelle une extrémité (8 a) d'un élément de fixation (8, 20, 21) peut être déplacée de façon axiale, c.-à-d. dans la première direction de coulissement (A), et être ensuite fixée de façon réversible au manchon de fixation (2) au moyen d'un premier élément de serrage (3).

4. Elément de positionnement selon l'une des revendications 1 à 3, **caractérisé en ce que** l'élément coulissant (6) est muni d'une ouverture de coulissement axial (6a) s'étendant vers l'avant, dans laquelle le manchon de fixation (2) peut coulisser selon la deuxième direction de coulissement (B) et être fixé de façon réversible à l'élément coulissant (6) au moyen d'un deuxième élément de serrage (4).

5. Elément de positionnement selon l'une des revendications 1 à 4, **caractérisé en ce que** l'élément coulissant (6) peut coulisser dans la troisième direction de coulissement (C) dans une ouverture de réglage (7a) située dans le boîtier de positionnement (7) et s'étendant de façon axiale vers l'avant, et qu'il peut être fixé de façon réversible au boîtier de positionnement (7) au moyen d'un troisième élément de serrage (5).

6. Elément de positionnement selon la revendication 5, **caractérisé en ce que** l'ouverture de réglage (7a) forme un canal de guidage (7b) pour l'élément coulissant (6), s'étendant dans la troisième direction de coulissement (C), avec deux bords de retenue (7c) diamétralement opposés l'un par rapport à l'autre, **en ce que** les bords de retenue (7c) présentent chacun sur la face extérieure des surfaces d'appui (7d) pour le troisième élément de serrage (5) et sur la face intérieure des profilés de coulissement (7e), **en ce que** l'élément coulissant (6) est muni d'un élément de paroi (6b) inséré dans le canal de guidage (7b) avec des collerettes de coulissement (6e) correspondant aux profilés de coulissement (7e) et avec un domaine de raccordement (6c) s'étendant vers l'avant au-delà des surfaces d'appui (7d) pour former une prise pour le troisième élément de serrage (5), lequel est capable en prenant appui contre les surfaces d'appui (7d) de serrer l'un contre l'autre en direction axiale le boîtier de positionnement (7) et l'élément coulissant (6), les profilés de coulissement (7c) par exemple et les collerettes de coulissement (6e) pouvant être mis ensembles en prise réversible au moyen d'une pression.

7. Elément de positionnement selon la revendication 6, **caractérisé en ce que** le domaine de raccordement (6c) de l'élément coulissant (6) a une forme cylindrique, **en ce que** le troisième élément de serrage (5) est muni d'une ouverture de serrage adaptée en conséquence, et **en ce que** le domaine de raccordement (6c) et le troisième élément de serrage (5) sont munis chacun respectivement d'un filetage extérieur ou d'un filetage intérieur correspondant l'un à l'autre.

8. Elément de positionnement selon les revendications 6 ou 7, **caractérisé en ce que** l'élément de paroi (6b) de l'élément coulissant (6) est muni dans l'ouverture de coulissement (6a) de deux épaulements de coulissement (6f) diamétralement opposés l'un à l'autre, qui s'étendent dans la deuxième direction de coulissement (B), et **en ce que** le manchon de fixation (2), disposé avec un certain jeu dans l'ouverture de coulissement (6a) de l'élément coulissant (6), est muni à son extrémité arrière (2b) de surfaces de coulissement (2c) correspondant aux épaulements de coulissement (6f).

9. Elément de positionnement selon l'une des revendications 6 à 8, **caractérisé en ce que** l'élément de paroi (6b) de l'élément coulissant (6) est muni de deux ouvertures de paroi (6g) diamétralement opposées l'une à l'autre et s'étendant dans la deuxième direction de coulissement (B), et **en ce que** le manchon de fixation (2) disposé avec un certain jeu dans l'ouverture de coulissement (6a) est muni à son extrémité arrière de languettes de coulissement (2e) adaptées par leur forme aux ouvertures de paroi (6g).

10. Elément de positionnement selon l'une des revendications 6 à 9, **caractérisé en ce que** l'élément de paroi (6b) de l'élément coulissant (6) est muni de bords d'appui (6d) prolongeant vers l'avant le domaine de raccordement (6c) pour le deuxième élément de serrage (4), et **en ce que** le manchon de fixation (2) s'étend avec une partie de raccordement (2d) pour la prise du deuxième élément de serrage (4) vers l'avant au-delà les bords d'appui (6d), ladite partie de raccordement (2d) étant apte, en prenant appui sur les bords d'appui (6d), à serrer l'un contre l'autre en direction axiale l'élément coulissant (6) et le manchon de fixation (2), permettant de mettre en prise réversible à l'aide d'une pression par exemple les épaulements de coulissement (6f) et les surfaces de coulissement (2c) ou les ouvertures de coulissement (6g) et les languettes de coulissement (2e).

11. Elément de positionnement selon la revendication 10, **caractérisé en ce que** la partie de raccordement (2d) de forme cylindrique et le deuxième élément de serrage (4) sont munis chacun respectivement d'un filetage extérieur et d'un filetage intérieur correspondant l'un à l'autre.

12. Elément de positionnement selon l'une ou plusieurs des revendications précédentes, **caractérisé en ce qu'**une extrémité antérieure (2f) du manchon de fixation (2) a la forme d'une bague de serrage (2g) pour la réception par forme et/ou par force d'une extrémité (8a) et qu'un premier élément de serrage (3) a la forme d'un écrou de serrage (3) entourant une bague de serrage (2g) notamment dans sa périphérie.

13. Elément de positionnement selon la revendication 12, **caractérisé en ce que** la bague de serrage (2g) est munie de languettes de serrage (2i) séparées au moyen d'une ou plusieurs fentes longitudinales (2h) s'étendant de façon axiale et élastiques en particulier en direction radiale, lesdites languettes pouvant être appuyées au moyen de l'écrou de serrage (3) radialement vers l'intérieur contre une extrémité (8a) de l'élément de fixation (8, 20, 21) disposée dans le manchon de fixation (2).

14. Elément de positionnement selon la revendication 13, **caractérisé en ce que** la bague de serrage (2g) est munie à peu près au niveau des fentes longitudinales (2h) d'un collet de fixation périphérique (2j) et l'écrou de serrage (3) est muni à l'intérieur d'épaulements de fixation (3a) correspondant à ce collet de fixation.

15. Elément de positionnement selon l'une ou plusieurs des revendications précédentes, **caractérisé en ce qu'**une extrémité (8a) de l'élément de fixation (8, 20, 21) est munie d'un élément de guidage (8b) pouvant par exemple être posé dessus et se rétrécissant en particulier vers l'extrémité en direction axiale.

16. Elément de positionnement selon l'une ou plusieurs des revendications précédentes, **caractérisé en ce que** les profilés de coulissement (7e) et les collerettes de coulissement (6e) sont munis de structures profilées (10) en dents de scie correspondant l'une à l'autre qui sont aptes, après le blocage d'un mouvement relatif du boîtier de positionnement (7) et de l'élément de coulissement (6) l'un par rapport à l'autre, à agir l'une contre l'autre dans la troisième direction de coulissement (C).

17. Elément de positionnement, selon l'une ou plusieurs des revendications 8 à 16, **caractérisé en ce que** les épaulements de coulissement (6f) et les surfaces de coulissement (2c) sont munis de structures profilées en dents de scie (9) correspondant l'une à l'autre et qui sont aptes, après le blocage d'un mouvement relatif de l'élément de coulissement (6) et du manchon de fixation (2) l'un par rapport à l'autre, à agir l'une contre l'autre dans la deuxième direction de coulissement (B).

18. Elément de positionnement selon l'une ou plusieurs des revendications 9 à 17, **caractérisé en ce que** les ouvertures de paroi (6g) et les languettes de coulissement (2e) sont munies de structures profilées en dents de scie (9) correspondant l'une à l'autre qui sont aptes, après le blocage d'un mouvement relatif de l'élément de coulissement (6) et du manchon de fixation (2) l'un par rapport à l'autre, à agir l'une contre l'autre dans la deuxième direction de coulissement (B).

19. Elément de positionnement selon l'une ou plusieurs des revendications 5 à 18, **caractérisé en ce qu'**un deuxième et/ou un troisième élément de serrage (4, 5) a/ont la forme d'une plaque de serrage avec une ouverture ou d'une bague de serrage munie en particulier d'une gorge périphérique s'étendant vers l'avant.

20. Elément de positionnement selon l'une ou plusieurs des revendications précédentes, **caractérisé en ce que** le boîtier de positionnement (7) est muni d'un fond de boîtier (7g) orienté essentiellement parallèlement au mur de bâtiment (19) ou de l'équivalent et situé essentiellement perpendiculairement à la première direction de coulissement (A).

21. Elément de positionnement selon la revendication 20, **caractérisé en ce que** la paroi (6b) et / ou le manchon de fixation (2) s'appuie avec sa/leur extrémité arrière (6h, 2b) sur le fond du boîtier (7g).

22. Elément de positionnement selon l'une ou plusieurs des revendications précédentes, **caractérisé en ce que** deux ou plusieurs ouvertures de passage (23) sont prévues dans le boîtier de positionnement (7) pour des vis de fixation ou des dispositifs similaires.

23. Elément de positionnement selon l'une ou plusieurs des revendications précédentes, **caractérisé en ce qu'**il peut être relié de façon réversible à une première et une seconde extrémité (20b, 20c) disposées essentiellement perpendiculairement à une partie centrale (20a) d'un élément de fixation (20), les extrémités supérieure et inférieure (20b, 20c) s'étendant horizontalement, notamment en position montée, la partie centrale (20a) de l'élément de fixation (20) pouvant s'étendre essentiellement parallèlement à un mur de bâtiment (19) ou un équivalent.

24. Elément de positionnement selon l'une ou plusieurs des revendications précédentes, **caractérisé en ce qu'**il peut être relié de façon réversible à l'extrémité (21b) située essentiellement perpendiculairement à une pièce charnière (21a) pour un élément de porte (11) d'un élément de fixation (21), l'extrémité (21b) étant disposée en particulier à l'état monté essentiellement horizontalement et la pièce charnière (21a) essentiellement verticalement.
